# EUROPÄISCHE PATENTANMELDUNG

(11) **EP 4 596 151 A1**
(43) Veröffentlichungstag der Anmeldung: **06.08.2025**
(21) Anmeldenummer: 24155388.2
(22) Anmeldetag: 01.02.2024
(51) Int. Cl.: B23B 31/11, B23B 31/00, B23B 51/04

(54) **BOHRMOTOR FÜR EINE BOHRKRONE**

(71) Anmelder: EURODIMA GmbH & Co KG, 5073 Wals-Himmelreich (AT)
(72) Erfinder: Winkler, Wolfgang, 5073 Wals-Himmelreich (AT)
(74) Vertreter: Schwarz & Partner Patentanwälte GmbH

(57) **Zusammenfassung**

Bohrmotor (1) für eine Bohrkrone (2),
wobei die Bohrkrone (1) einen Anschluss (23) für den Bohrmotor (1) aufweist, wobei der Anschluss (23) von einem rohrförmigen Abschnitt (23) gebildet wird, der an der Außenseite einen Außenprofil (26) und an der Innenseite ein Innengewinde (27) aufweist,
wobei der Bohrmotor (1) einen Rotationsantrieb (30) mit einer rotierbaren Welle (31) aufweist,
wobei die Welle (31) eine Werkzeugaufnahme (10) aufweist,
wobei die Werkzeugaufnahme ein Außengewinde (11) umfasst, welches mit dem Innengewinde (27) der Bohrkrone (2) verbindbar ist,
wobei die Werkzeugaufnahme (10) eine Hülse (12) aufweist, welche konzentrisch um zur Welle (31) angeordnet ist,
wobei die Hülse (12) einen innenliegenden Werkzeugabschnitt (13) aufweist, welcher formschlüssig zum Außenprofil (26) der Bohrkrone (2) ausgebildet ist,
wobei der Bohrmotor (1) eine lösbare Arretiervorrichtung (29) aufweist, mit welcher die Hülse (12) mit der Welle (31) koppelbar und von der Welle (31) entkoppelbar ist.

## Beschreibung

Die vorliegende Erfindung betrifft einen Bohrmotor für eine Bohrkrone, wobei die Bohrkrone einen Anschluss für den Bohrmotor aufweist, wobei der Anschluss von einem rohrförmigen Abschnitt gebildet wird, der an der Außenseite ein Außenprofil und an der Innenseite ein Innengewinde aufweist, wobei der Bohrmotor einen Rotationsantrieb mit einer Welle aufweist, wobei die Welle einen Vorsprung mit einer Werkzeugaufnahme aufweist, wobei am Vorsprung ein Außengewinde vorgesehen ist, welches mit dem Innengewinde der Bohrkrone verbindbar ist.

### HINTERGRUND DER ERFINDUNG

Eine Bohrkrone ist ein Werkzeug für das Durchbohren von sehr harten Materialien wie Beton, Stein, Metall oder Kombinationen daraus. Die Bohrkrone besteht typischerweise aus einem Metallzylinder der einseitig durch eine Endkappe mit einem Anschluss für einen Bohrmotor abgeschlossen ist und auf der offenen Seite eine Schneidkante aufweist, die meist mit einem Schneidbesatz versehen ist. Der Schneidbesatz besteht in der Regel aus Schneidelementen aus gesintertem Stahl mit einer Beimischung von Industriediamant, wobei der Schneidbesatz auf den Metallzylinder aufgelötet oder aufgeschweißt ist. Diamantbohrkronen sind besonders effektiv, da Diamanten extrem hart sind. Die Schneidkante der Bohrkrone weist mehrere Schneidelemente auf, die so geformt sind, dass sie effizient durch Beton schneiden können. Diese Schneidelemente sind so konstruiert, dass sie beim Drehen der Krone den Beton schneiden und zerkleinern.

Die Bohrkrone kann Kanäle oder Öffnungen aufweisen, die das beim Bohren entstehende Bohrmehl bzw. daraus mit Wasser erzeugten Bohrschlamm abtransportieren. Dies verhindert, dass die Bohrkrone verstopft und überhitzt. Die Bohrkrone wird mit einem Bohrmotor verbunden, wobei hierfür ein Anschluss an der Rückseite der Bohrkrone und eine Werkzeugaufnahme am Bohrmotor vorgesehen ist. Typischerweise weist die Werkzeugaufnahme ein Außengewinde (in der Regel eine Bohrspindel mit 1 1/4") und der Anschluss ein korrespondierendes Innengewinde auf, sodass zwischen Bohrkrone und Bohrmotor ein Gewindeanschluss erfolgt.

Die Bohrkrone muss mit dem Bohrmotor sicher und stabil verbunden sein, um eine exakte Bohrung zu gewährleisten. Eine lockere Verbindung kann zu einem ungenauen Bohrloch, erhöhtem Verschleiß an der Bohrkrone und dem Lösen der Bohrkrone vom Bohrmotor führen, was ein Sicherheitsrisiko darstellt. Bereits im normalen Betrieb des Bohrmotors mit Bohrkrone wird die Gewindeverbindung beim Bohren immer weiter festgezogen. Insbesondere beim Bohren von bewehrtem Beton kann beim Eingriff der Bohrsegmente in die Bewehrung eine abrupte Abbremsung der Rotationsbewegung der Bohrkrone erfolgen, die in einer nahezu unlösbaren Verklemmung der Gewindeverbindung resultieren kann. Diese Verklemmung kann oft nur durch Aufschneiden der Gewindeverbindung gelöst werden, was zu einer Zerstörung des Anschlusses der Bohrkrone führt. Die Bohrkrone ist dann unbrauchbar und muss entsorgt werden, obwohl die Bohrsegmente noch eine Weiternutzung ermöglichen würden.

EP 3 854 988 A1 offenbart eine Werkzeug-Kupplung in Form eines zweiteiligen Adapters für ein Koppeln und Entkoppeln einer Bohrkrone. EP 0 235 581 A1 zeigt einen Bohrmotor, der mit einem Bajonettverschluss mit einer Bohrkrone verbindbar ist.

### KURZBESCHREIBUNG DER ERFINDUNG

Die Gewindeverbindung beim Stand der Technik stellt bei der praktischen Anwendung von Bohrkrone und Bohrmotor ein Risiko der vorzeitigen Unbrauchbarseins der Bohrkrone dar, wenn sich die Verbindung zwischen Bohrkrone und Bohrmotor nicht mehr lösen lässt. Die vorliegende Erfindung hat es sich zur Aufgabe gestellt, die beschriebene Verbindung zwischen Bohrmotor und Bohrkrone anders zu gestalten, um eine Verklemmung der Gewindeverbindung zu vermeiden. Insbesondere soll weiterhin eine leichte Montage der Bohrkrone an Bohrmotor möglich sein, während die Demontage der Bohrkrone vom Bohrmotor auch im Falle des Steckenbleibens der Bohrkrone im zu bohrenden Material möglich ist, ohne die Bohrkrone zu zerstören.

### Gelöst wird diese Aufgabe durch einen

Bohrmotor für eine Bohrkrone,
wobei die Bohrkrone einen Anschluss für den Bohrmotor aufweist, wobei der Anschluss von einem rohrförmigen Abschnitt gebildet wird, der an der Außenseite ein Außenprofil und an der Innenseite ein Innengewinde aufweist,
wobei der Bohrmotor einen Rotationsantrieb mit einer rotierbaren Welle aufweist,
wobei die Welle eine Werkzeugaufnahme aufweist,
wobei die Werkzeugaufnahme ein Außengewinde umfasst, welches mit dem Innengewinde der Bohrkrone verbindbar ist,
dadurch gekennzeichnet, dass die Werkzeugaufnahme eine Hülse aufweist, welche die Welle konzentrisch umgibt,
wobei die Hülse einen innenliegenden Werkzeugabschnitt aufweist, welcher formschlüssig zum Außenprofil der Bohrkrone ausgebildet ist,
wobei der Bohrmotor eine lösbare Arretiervorrichtung aufweist, mit welcher die Hülse mit der Welle koppelbar und von der Welle entkoppelbar ist.

Im Unterschied zum Stand der Technik mit reiner Gewindeverbindung ist im vorliegenden Fall an der Werkzeugaufnahme zusätzlich eine Hülse vorgesehen, welche einen innenliegenden Werkzeugabschnitt aufweist, welcher formschlüssig zum Außenprofil der Bohrkrone ausgebildet ist. Dieser innenliegende Werkzeugabschnitt ist zusätzlich mit dem Außenprofil der Bohrkrone in Eingriff bringbar. Normalerweise dient das Außenprofil der Bohrkrone nur dem Lösen der Gewindeverbindung oder der Herstellung der Gewindeverbindung zwischen Anschluss und Werkzeugaufnahme mittels Schraubenschlüssels. Daher ist das Außenprofil der Bohrkrone häufig ein Außensechskantabschnitt. Die Kraftübertragung erfolgt beim Stand der Technik von der Welle auf die Bohrkrone über die Gewindeverbindung. Erfindungsgemäß erfolgt die Kraftübertragung in erster Linie über die Hülse am Bohrmotor und das Außenprofil an der Bohrkrone, wobei der innenliegende Werkzeugabschnitt und das Außenprofil in Kontakt sind. Die Gewindeverbindung dient in diesem Fall primär der Stabilisierung der sauberen Rotation der Bohrkrone an der Welle, nicht aber der Kraftübertragung.

Bei der Befestigung der Bohrkrone am Bohrmotor wird zunächst die Arretiervorrichtung so gestellt, dass diese mit dem Getriebegehäuse gekoppelt ist und somit die Hülse nicht mehr drehbar ist. Das Außengewinde der Werkzeugaufnahme ist weiterhin drehbar und kann somit in das Innengewinde der Bohrkrone eingeschraubt werden. Die feststehende Hülse dient hierbei als Festlager und somit schraubt sich die Welle in das Innengewinde der Bohrkronen. Das maximale Anzugsmoment zwischen Welle und Bohrkrone wird durch den Bohrmotor mechanisch begrenzt. Sobald die Gewindeverbindung zwischen Innengewinde der Bohrkrone und Außengewinde der Werkzeugaufnahme hergestellt ist, wird die Arretiervorrichtung mit gekoppelt, zum Beispiel mit einen Kupplungselement. Die Kraftübertragung des Bohrmotors auf die Bohrkrone erfolgt ausschließlich über die Hülse. Die Arretiervorrichtung hat also die Aufgabe die Drehbewegungen von Hülse und Bohrkrone je nach Betriebszustand zu koppeln bzw. entkoppeln.

Der innenliegende Werkzeugabschnitt, welcher formschlüssig zum Außenprofil der Bohrkrone ausgebildet ist, ist von der Funktion einem Ringschlüssel nachgebildet. Die Hülse ist in einem Bereich der Welle konzentrisch zur Welle angeordnet und weist einen radialen Abstand zwischen Werkzeugaufnahme und Welle auf. Der innenliegende Werkzeugabschnitt weist typischerweise ein ringförmig angeordnetes Profil auf, welches formschlüssig zum Außenprofil der Bohrkrone passt. In vielen Fällen umfasst das Außenprofil der Bohrkrone einen geraden, zylinderförmigen Abschnitt auf mit einem Polygon als Querschnitt, wie z.B. einen Außensechskantabschnitt. Daher ist der innenliegende Werkzeugabschnitt passend, als zylinderförmiger Mantel mit einem formschlüssigen innenliegenden Querschnittsprofil, z.B. als Innensechskant, Innensechsrund oder Innensechszwölf ausgebildet.

Bohrkronen weisen meist ein Innengewinde mit 1 ¼ Zoll nach UNC (Unified Thread Standard) auf, d.h. einen Durchmesser mit 1,25 Zoll (31,75 mm). Das Außengewinde am Bohrmotor ist dementsprechend passend zum Innengewinde ausgebildet.

Die Hülse ist in der Regel aus Metall ausgebildet, z.B. aus Stahl oder Aluminium, um eine hohe Festigkeit und Haltbarkeit zu gewährleisten.

Der Bohrmotor weist als Rotationsantrieb vorzugsweise einen Elektromotor auf. In der Regel ist noch ein Getriebe vorgesehen, um die vom Rotationsantrieb erzeugte Drehzahl und das Drehmoment auf ein für die Bohrkrone geeignetes Maß zu reduzieren und anzupassen. Weiters kann eine Steuervorrichtung vorgesehen sein, um die Drehzahl und/oder das Drehmoment zu steuern. Ein Gehäuse kann zum Schutz der internen Komponenten vorgesehen sein. Außerdem kann ein Handgriff für die Handhabung und Steuerung des Geräts vorgesehen sein. Eine Befestigung für einen Bohrständer kann ebenfalls vorgesehen sein, um den Bohrmotor auf einem Bohrständer zu befestigen.

Der Bohrmotor kann ein integriertes Kühlsystem aufweisen, meist für die Wasserkühlung, um Überhitzung während intensiver Bohrarbeiten zu verhindern.

Bevorzugt weist die Werkzeugaufnahme einen Vorsprung auf, wobei ein Teil des Außengewindes auf dem Vorsprung angeordnet ist. Auf diese Weise kann die Bohrkrone leichter mit dem Bohrmotor über die Gewindeverbindung verbunden werden.

Bevorzugt ist ein Teil des Außengewindes von der Hülse radial umgeben. Dies ermöglicht eine automatisierte und Werkzeuglose Montage der Bohrkrone am Bohrmotor.

Weiters kann die Arretiervorrichtung einen Hülsenfreilauf umfassen, um die Demontage der Bohrkrone zu ermöglichen bzw. zu erleichtern.

Die Arretiervorrichtung kann ein Schiebeelement und ein an der Welle angeordnetes Kupplungselement aufweisen, wobei die Hülse über das Schiebeelement mit der Welle koppelbar und von der Welle entkoppelbar ist. Außerdem kann das Schiebeelement mittels eines Passstiftes mit dem Getriebegehäuse des Bohrmotors befestigbar sein, um die Hülse starr zu fixieren.

Der innenliegende Werkzeugabschnitt ist im einfachsten Fall ein Innensechskant, ein Innensechsrund oder ein Innensechszwölf.

### DETAILLIERTE BESCHREIBUNG DER ERFINDUNG

Weitere Details der Erfindung werden anhand von Ausführungsbeispielen mit den beiliegenden Figuren und der nachfolgenden Figurenbeschreibung erläutert.
- Fig. 1a, 1b: zeigt eine Bohrkrone in zwei Ansichten nach Stand der Technik.
- Fig. 2: zeigt einen Bohrmotor nach Stand der Technik.
- Fig. 3a, 3b: zeigt einen Bohrmotor gemäß der Erfindung in Seitenansicht (Fig. 3a) und in Schrägriss (Fig. 3b).
- Fig. 4a, 4b: zeigt Querschnitte durch den Bohrmotor der Fig. 3a und 3b in verschiedenen Betriebszuständen.

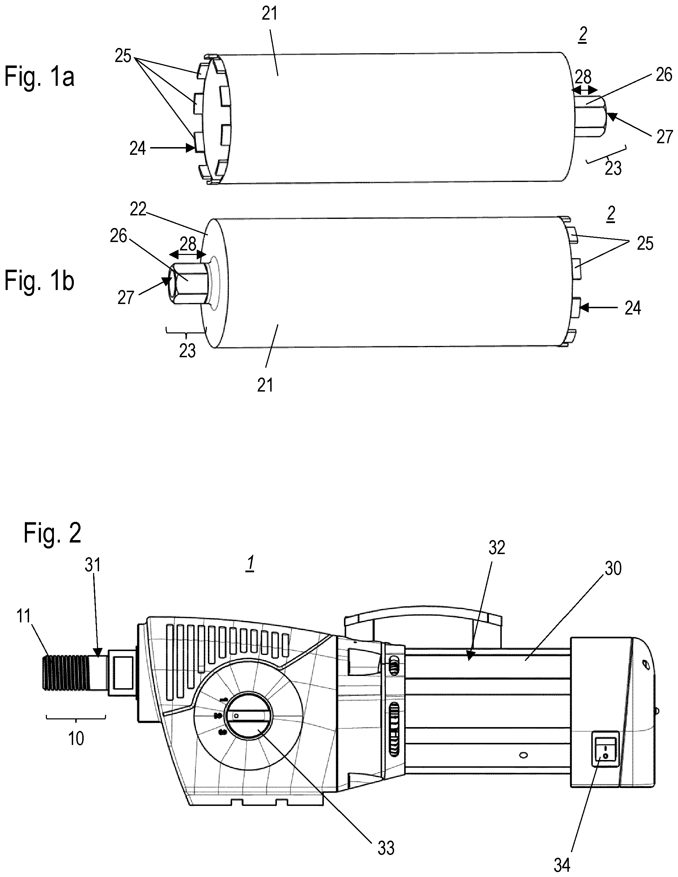

Fig. 1a und Fig. 1b zeigt eine Bohrkrone 2 nach Stand der Technik in zwei Schrägansichten. Der später beschriebene erfindungsgemäße Bohrmotor 1 kommt für derartige Bohrkronen 2 zum Einsatz. Die Bohrkrone 2 weist einen Grundkörper 21 auf, der einem kreisförmigen, geraden Zylinder entspricht. Der Grundkörper 21 ist einseitig durch eine Endkappe 22 verschlossen, an der ein Anschluss 23 für einen Bohrmotor 1 vorhanden ist. Auf der gegenüberliegenden offenen Seite des Grundkörpers 21 ist eine Schneidkante 24 vorgesehen. Diese kann wie im gezeigten Beispiel aus einzelnen Schneidelementen 25 bestehen, die einen Schneidbesatz bilden. Die Schneidelemente 25 bestehen in der Regel aus gesintertem Stahl mit einer Beimischung von Industriediamant, wobei der Schneidbesatz auf den Grundkörper 21 aufgeschweißt sind. Wenn die Bohrkrone 2 in Rotation versetzt wird, dringen die Schneidelemente 25 in das zu schneidende Material (insbesondere bewehrten Beton) ein.

Der Anschluss 23 wird von einem rohrförmigen Abschnitt 28 gebildet, der von der Endkappe 22 absteht. An der Außenseite weist der Anschluss 23 ein Außenprofil 26 und an der Innenseite ein Innengewinde 27 auf. Das Außenprofil 26 ist als Außensechskant ausgebildet. Über das Innengewinde 27 wird die Bohrkrone 2 mit dem Bohrmotor 1 verbunden. Typischerweise sind Bohrkronen 2 mit einen 1 ¼ Zoll UNC (Unified Thread Standard) Innengewinde 27 ausgestattet, sodass das Außengewinde 11 des Bohrmotors 1 passend ausgebildet sein muss.

Die Bohrkrone 2 kann Kanäle oder Öffnungen aufweisen, um das beim Bohren entstehende Bohrmehl oder anfallenden Bohrschlamm abzutransportieren. Der Betrieb der Bohrkrone 2 kann sowohl im Trockenen als auch im Nassen erfolgen.

Ein Bohrmotor 1 nach Stand der Technik ist in Fig. 2 gezeigt. Der Bohrmotor 1 weist eine Werkzeugaufnahme 10 auf, die ein Außengewinde 11 umfasst. Zum Verbinden der Bohrkrone 2 mit dem Bohrmotor 1 über eine Gewindeverbindung wird das Innengewinde 27 der Bohrkrone 2 auf das Außengewinde 11 geschraubt. Ist das Innengewinde 27 der Bohrkrone 2 mit einen 1 ¼ Zoll UNC ausgestattet, muss das entsprechende Außengewinde 11 der Werkzeugaufnahme entsprechend und passend ausgebildet sein. Die Bohrkrone 2 ist danach mit dem Bohrmotor 1 stabil verbunden.

Im Betrieb wird über einen im Gehäuse 32 des Bohrmotors 1 verbauten Rotationsantrieb 30 die Welle 31 in Rotation versetzt, welche wiederum die Bohrkrone 2 über die Gewindeverbindung in Rotation versetzt, sodass ein Bohren erfolgen kann. Beim eigentlichen Bohren kommt es speziell bei bewehrtem Beton häufig dazu, dass Schneidelemente 25 in der Bewehrung des Betons abrupt abgebremst werden und sich mit der Bewehrung verkeilen. Die Rotationsbewegung der Bohrkrone 2 kann zu einer nahezu unlösbaren Gewindeverbindung führen, was eine Demontage des Bohrmotors 1 von der festsitzenden Bohrkrone 2 erschwert.

In schlimmsten Fall muss der rohrförmige Abschnitt des Anschlusses 23 mit einem Winkelschneider zerstört werden, um den Bohrmotor 1 zu lösen. Im Zeitfenster, bis diese Lösung erfolgt ist, ist ein Arbeiten mit dem Bohrmotor 1 nicht möglich.

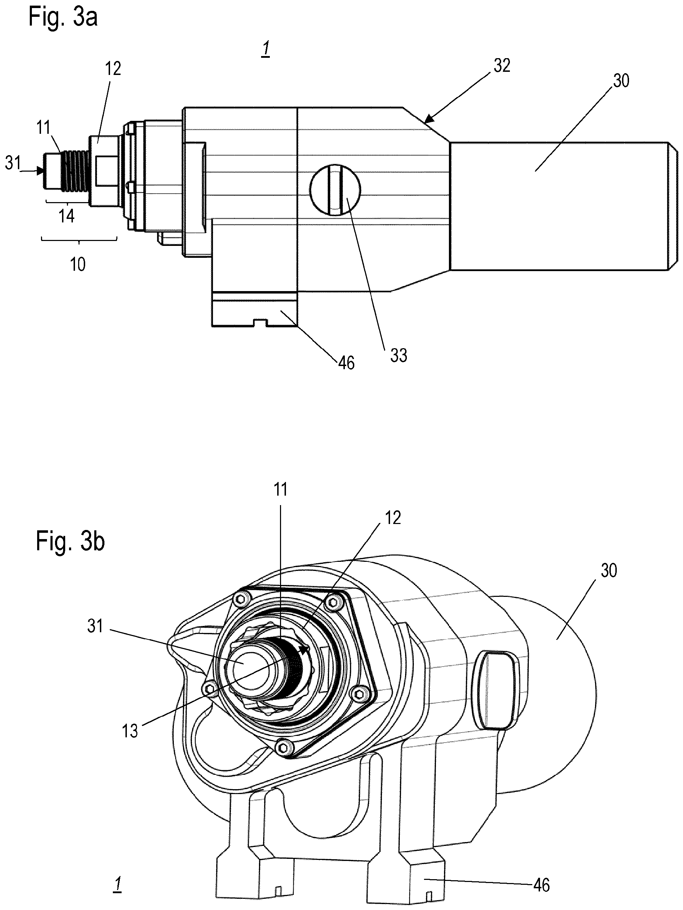

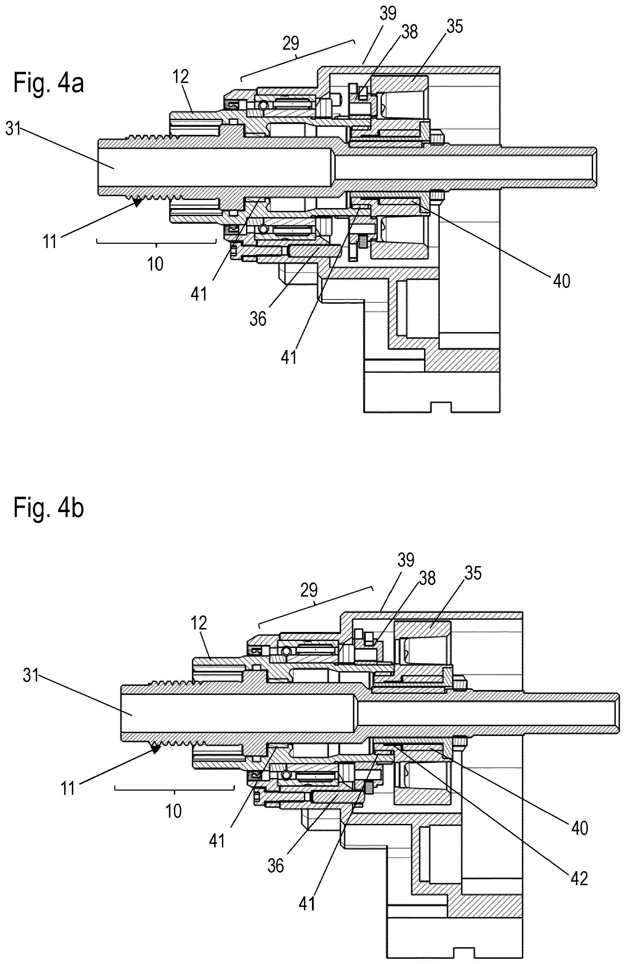

Der erfindungsgemäße Bohrmotor 1 ist in den Fig. 3a und 3b in Seitenansicht und in einem Schrägriss gezeigt, der innere Aufbau ist in den Schnittdarstellungen der Fig. 4a und 4b erkennbar.

Fig. 3a zeigt den Bohrmotor 1, der einen Rotationsantrieb 30 aufweist, welcher in ein Gehäuse 32 integriert ist. Der Rotationsantrieb 30 (meist ein Elektromotor) ist mit einer Welle 31 gekuppelt und dazu ausgelegt, die Welle 31 in Rotation zu versetzen. Der Rotationsantrieb 30 kann über einen Ein-/Ausschalter aktiviert und deaktiviert werden. Ein Steuerelement 33 kann die Rotation steuern (z.B. Rotationsgeschwindigkeit, Drehmoment und / oder Schlagenergie für Schlagbohrbetrieb).

Die Welle 31 weist eine Werkzeugaufnahme 10 auf, an welcher die Bohrkrone 2 befestigbar ist. Die Werkzeugaufnahme 10 weist dazu einerseits einen Vorsprung 14 auf, auf dem ein Außengewinde 11 vorgesehen ist, welches mit dem Innengewinde 27 der Bohrkrone 2 mittels einer Gewindeverbindung verbindbar ist. Andererseits weist die Werkzeugaufnahme 10 eine Hülse 12 auf, welche konzentrisch zum Vorsprung 14 angeordnet und auf der Welle 31 drehbar gelagert ist. Die Hülse 12 weist einen innenliegenden Werkzeugabschnitt 13 auf, welcher formschlüssig zum Außenprofil 26 der Bohrkrone 2 ausgebildet ist. Der innenliegende Werkzeugabschnitt 13 kann zusätzlich mit dem Außenprofil 26 der Bohrkrone 2 in Eingriff gebracht werden. Abweichend von der "normalen" Funktion des Außenprofils 26, die dem Lösen der Gewindeverbindung oder der Herstellung der Gewindeverbindung zwischen Anschluss 23 und Werkzeugaufnahme 10 dient, erfolgt die Kraftübertragung erfindungsgemäß nicht unmittelbar von der Welle 31 auf die Bohrkrone 2, also nicht mehr über die Gewindeverbindung, sondern vielmehr vom Kupplungselement 35 auf die Hülse 12 und über den Werkzeugabschnitt 13 der Hülse 12 auf das Außenprofil 26 der Bohrkrone 2. Der Bohrmotor 1 weist eine Arretiervorrichtung 29, mit welcher die Hülse 12 mit der Welle 31 koppelbar und entkoppelbar ist.

Die mittelbare Kraftübertragung vom Rotationsantrieb 30 des Bohrmotors 1 via die Hülse 12 auf das Außenprofil 26 der Bohrkrone 2, wobei der innenliegende Werkzeugabschnitt 13 und das Außenprofil 26 in Kontakt sind, verhindert das Problem des Verklemmens.

Der innere Aufbau des Bohrmotors 1 samt Arretiervorrichtung 29 wird anhand der Fig. 4a und 4b näher beschrieben, wobei Fig. 4a den arretierten Zustand (für den Bohrbetrieb) und Fig. 4b den gelösten Zustand der Arretiervorrichtung 29 (für die Montage und Demontage der Bohrkrone 2) zeigt.

Der Bohrmotor 1 weist eine Arretiervorrichtung 29 auf, mit der zwei verschiedene Schaltstellungen möglich sind, sodass die Hülse 12 und die Welle 31 koppelbar und entkoppelbar sind. Die Arretiervorrichtung 29 umfasst dazu ein Kupplungselement 35 in Form eines Zahnrades, welches mit der Welle 31 verbunden ist, sodass sich die Welle 31 stets mit dem Kupplungselement 35 dreht. Zwischen dem Kupplungselement 35 und der Welle 31 ist eine Toleranzhülse 42 verbaut, die ab einem bestimmten Drehmoment durchrutscht. Das heißt, das Kupplungselement 35 kann sich auch unabhängig von der Welle 31 drehen. Mit dieser Funktion wird die maximale Klemmkraft zwischen der Bohrkrone 2 und der Werkzeugaufnahme 10 begrenzt. Alternativ zu einer Toleranzhülse 42 könnte aber auch ein Bremselement (nicht gezeigt) vorgesehen sein.

Der Rotationsantrieb 30 ist hier ein Elektromotor, welcher elektrische Energie in Rotationsbewegung des Kupplungselements 35 umwandelt und diese im arretierten Zustand weiter an die Hülse 12 gibt, um die Bohrkrone 2 zu drehen. Weiters ist ein (nicht gezeigtes) Getriebe vorhanden, um die vom Rotationsantrieb 30 erzeugte Drehzahl und Drehmoment auf ein für das Bohren geeignetes Maß an der Hülse 12 zu reduzieren und anzupassen. Steuer- und Regelungselemente 33 ermöglichen die Steuerung der Drehzahl und des Drehmoments und können zusätzliche Sicherheitsfunktionen bieten.

Am Gehäuse 32 kann ein Handgriff zur Handhabung (nicht gezeigt) und/oder eine Befestigung 46 für einen Bohrständer vorgesehen sein, um den Bohrmotor 1 auf einem Bohrständer aufzuspannen und die Bewegung zu automatisieren.

Die Fig. 4b zeigt eine Schaltstellung, in der die Arretiervorrichtung 29 gelöst ist, d.h., bei dem Hülse 12 und die Welle 31 entkoppelt sind. In diesem Zustand greifen Passstifte 36 der Arretiervorrichtung 29 formschlüssig in das Getriebegehäuse 39 ein, sodass die Hülse 12 als Festlager fungiert. In dieser Schaltstellung ist Schiebeelement 38 vom Kupplungselement 35 gelöst und nur mit der Hülse 12 verbunden. Der Rotationsantrieb 30 treibt nun rechtsdrehend über ein Getriebe das Kupplungselement 35 und die Welle 31 mit dem Außengewinde 11 an.

Die Welle 31 (und das Außengewinde 11) dreht sich mittels der Gleitbuchsen 41 unabhängig von der Hülse 12. Das Außengewinde 11 der Werkzeugaufnahme 10 des Bohrmotors 1 kann nun auf das Innengewinde 27 der Bohrkrone 2 geschraubt werden. Wenn das Außengewinde 11 vollständig in das Innengewinde 27 der Bohrkrone 2 eingeschraubt ist, ergibt sich eine Klemmung zwischen Bohrmotor 1 und Bohrkrone 2. Die benötigte Klemmkraft ist über den Elektromotor definiert. Zusätzlich ist eine Toleranzhülse 42 verbaut, sodass bei Überschreitung der maximalen Klemmkraft die Welle 31 sich unabhängig vom Kupplungselement 35 drehen lässt.

In Fig. 4a wird die gekoppelte Arretiervorrichtung 29 gezeigt. Sobald die Gewindeverbindung zwischen Innengewinde 23 der Bohrkrone 2 und Außengewinde 11 des Bohrmotors 1 hergestellt ist, wird die Arretiervorrichtung 29 mit dem Kupplungselement 35 (Zahnrad) gekoppelt. Für diese Koppelung wird zunächst das Schiebeelement 38 verschoben, sodass die Passstifte 36 nicht mehr in das Schiebeelement 38 eingreifen. Das Schiebeelement 38 wird in Richtung Kupplungselement 35 bewegt, sodass das Schiebeelement 38 in das Kupplungselement 35 eingreift. In dieser Schaltstellung wird über das Kupplungselement 35 die Welle 31 und die Hülse 12 gleichzeitig angetrieben und in weiterer Folge die Bohrkrone 2. Die Kraftübertragung des Bohrmotors 1 auf die Bohrkrone 2 wird ausschließlich über die formschlüssige Verbindung zwischen dem Außenprofil 26 der Bohrkrone 2 und der Hülse 12 des Bohrmotors 1 sichergestellt. Auch bei einem abrupten Abbremsen der Bohrkrone 2, kann sich die Klemmung des Innengewindes 27 der Bohrkrone 2 und dem Außengewinde 11 des Bohrmotors 1 nicht mehr verkeilen.

Zur Demontage der Bohrkrone 2 vom Bohrmotor 1 wird ausgehend von der gekoppelten Arretiervorrichtung 29 (Fig. 4b) das Schiebeelement 38 wieder in die Gegenrichtung bewegt und die Passstifte 36 werden wieder mit dem Getriebegehäuse 39 verbunden. Die Passstifte 36 der Arretiervorrichtung 29 greifen formschlüssig in Öffnungen des Getriebegehäuses 39 ein. Im diesem Zustand der Arretiervorrichtung 29 fungiert die Hülse 12 als Festlager. Der Rotationsantrieb 30 treibt nun linksdrehend über das Getriebe das Kupplungselement 35 und die Welle 31 mit dem Außengewinde 11 an. Die Welle 31 dreht sich mittels der Gleitbuchsen 41 unabhängig von der Hülse 12. Zwischen dem Kupplungselement 35 und der Welle 31 ist ein Hülsenfreilauf 40 verbaut, der im Rechtslauf die unabhängige Drehbewegung des Kupplungselements 35 und der Welle 31 zulässt und im Linkslauf die Drehbewegung des Kupplungselements 35 auf die Welle 31 überträgt.

Das Außengewinde 11 der Werkzeugaufnahme 10 des Bohrmotors 1 kann nun vom Innengewinde 27 der Bohrkrone 2 geschraubt werden.

Das Verbinden von Bohrkrone 2 und Bohrmotor 1 sowie das Lösen dieser Verbindung wird nachfolgend nochmals genauer beschrieben.

### Montage der Bohrkrone am Bohrmotor (Fig. 4b):

In einem Verfahren zur Montage der Bohrkrone 2 am Bohrmotor 1 kann zunächst die Arretiervorrichtung 29 entkoppelt werden. Dazu wird das Steuerelement 33 auf eine Stellung Montage gestellt und die Arretiervorrichtung 29 betätigt, um das Schiebeelement 38 wird mit Getriebegehäuse 39 verbunden. Somit ist die Hülse 12 nicht mehr drehbar.

Die Bohrkrone 2 wird auf die Werkzeugaufnahme 10 geschoben, bis das Außenprofil 26 der Bohrkrone 2 in die Hülse 12 eingreift und somit auch nicht mehr drehbar ist.

Es wird der Rotationsantrieb 30 mit aktiviert, sodass sich die Welle 31 dreht. Die Kraftübertragung über das Kupplungselement 35 erfolgt auf das Außengewinde 27 solange, bis ein Widerstand auftritt und der Rotationsantrieb 30 deaktiviert wird. Hierfür kann die Steuerung einen Betriebszustand für die "Bohrkronenmontage" aufweisen, um die richtigen Kräfte einzustellen.

Die Bohrkrone 2 ist somit auf der Werkzeugaufnahme 10 montiert. Um ein Überschreiten des vorgegebenen Anzugsmomentes zu verhindern, ist der Rotationsantrieb 30 im Betriebszustand "Bohrkronenmontage" hinsichtlich Drehzahl und Drehmoment elektronisch gedrosselt. Es kann auch eine Toleranzhülse 42 zwischen Zahnrad und der Bohrspindel verbaut sein, die ein vorgebbares Drehmoment mechanisch begrenzt.

Anschließend wird die Arretiervorrichtung 29 gekoppelt. Dabei wird das Schiebeelement 38 mit dem Kupplungselement 35 gekoppelt und die Hülse 12 vom Getriebegehäuse 39 gelöst. Über das Steuerelement 33 kann der Betrieb des Bohrmotors aufgenommen und über das Steuerelement 33 zum Beispiel in den 1., 2. oder 3. Gang geschaltet werden.

Das volle Drehmoment wird vollständig über die Hülse 12 auf die Bohrkrone 2 übertragen. Die Gewindeverbindung überträgt nur dass von die Toleranzhülse 42 festgelegte Drehmoment. Die Bohrkrone 2 kann somit automatisch und werkzeuglos mit einem vordefinierten Drehmoment an der Werkzeugaufnahme 10 des Bohrmotor 1 montiert werden.

### Demontage der Bohrkrone vom Bohrmotor (Fig. 4b):

In einem Verfahren zur Demontage der Bohrkrone 2 vom Bohrmotor wird zunächst die Arretiervorrichtung 29 entkoppelt. Dazu wird das Steuerelement 33 auf eine Stellung Demontage gestellt und die Arretiervorrichtung 29 entkoppelt werden, und das Schiebeelement 38 wird mit Getriebegehäuse 39 verbunden. Somit ist die Hülse 12 nicht mehr drehbar.

Es wird der Rotationsantrieb 30 im gegenläufigen Sinn ("Linkslauf") aktiviert, sodass sich die Welle 31 dreht. Der Rotationsantrieb 30 dreht mit vollem Drehmoment aber der Drehzahl elektronisch gedrosselt nach links, und löst somit die Bohrkrone 2 von der Welle 31. Damit das volle Drehmoment erreicht werden kann (zur Bohrkronenmontage durch Toleranzhülse mechanisch gedrosselt) wird ein sogenannter Hülsenfreilauf 40 verbaut. Hülsenfreiläufe 40 sind Einwegkupplungen, sie übertragen Drehmomente nur in eine Richtung.

Die Bohrkrone 2 wird somit automatisch und werkzeuglos vom Bohrmotor 1 demontiert.

### Arretiervorrichtung in Position "neutral"

Bei einer "Verklemmung" kann es vorkommen, dass das Schiebeelement 38 nicht mit dem Getriebegehäuse 39 gekoppelt werden kann, wegen einer Zahn auf Zahn Stellung zwischen Kupplungselement und Schiebeelement 38. In diesem Fall kann trotzdem das Schiebeelement 38 entkoppelt werden, somit ergibt sich auch eine Neutralstellung. Da in diesem Fall die Bohrkrone 2 durch die Verklemmung fixiert wird, ist ein Lösen von der Welle 31 genauso möglich, ohne dass eine Koppelung der Hülse 12 mit dem Getriebegehäuse 39 benötigt wird.

Die Neutralstellung gibt es nicht rastend, wenn das Schiebeelement 38 federbelastet geschaltet wird. Sobald die Position Zahn auf Zahn sich ändert, fällt das Schiebeelement 38 automatisch in die vorgewählte Betriebsart.

## Patentansprüche

1. Bohrmotor (1) für eine Bohrkrone (2),
wobei die Bohrkrone (1) einen Anschluss (23) für den Bohrmotor (1) aufweist, wobei der Anschluss (23) von einem rohrförmigen Abschnitt (23) gebildet wird, der an der Außenseite ein Außenprofil (26) und an der Innenseite ein Innengewinde (27) aufweist,
wobei der Bohrmotor (1) einen Rotationsantrieb (30) mit einer rotierbaren Welle (31) aufweist,
wobei die Welle (31) eine Werkzeugaufnahme (10) aufweist,
wobei die Werkzeugaufnahme ein Außengewinde (11) umfasst, welches mit dem Innengewinde (27) der Bohrkrone (2) verbindbar ist,
**dadurch gekennzeichnet, dass** die Werkzeugaufnahme (10) eine Hülse (12) aufweist, welche die Welle (31) konzentrisch umgibt,
wobei die Hülse (12) einen innenliegenden Werkzeugabschnitt (13) aufweist, welcher formschlüssig zum Außenprofil (26) der Bohrkrone (2) ausgebildet ist,
wobei der Bohrmotor (1) eine lösbare Arretiervorrichtung (29) aufweist, mit welcher die Hülse (12) mit der Welle (31) koppelbar und von der Welle (31) entkoppelbar ist.

2. Bohrmotor nach Anspruch 1, **dadurch gekennzeichnet, dass** die Werkzeugaufnahme (10) einen Vorsprung (14) aufweist, wobei ein Teil des Außengewindes (11) auf dem Vorsprung (14) angeordnet ist.

3. Bohrmotor nach Anspruch 2, **dadurch gekennzeichnet, dass** die ein Teil des Außengewindes (11) von der Hülse radial umgeben ist.

4. Bohrmotor nach einem der Ansprüche 1 bis 3, **dadurch gekennzeichnet, dass** die Arretiervorrichtung (29) ein Schiebeelement (38) und ein an der Welle (31) angeordnetes Kupplungselement (35) aufweist, wobei die Hülse (12) über das Schiebeelement (38) mit der Welle (31) koppelbar und von der Welle (31) entkoppelbar ist.

5. Bohrmotor nach Anspruch 4, **dadurch gekennzeichnet, dass** das Schiebeelement (38) mit dem Kupplungselement (35) formschlüssig verbindbar ist, vorzugsweise über eine Zahnradverbindung.

6. Bohrmotor nach einem der Ansprüche 1 bis 5, **dadurch gekennzeichnet, dass** das Schiebeelement (38) mittels eines Passstiftes (36) mit dem Getriebegehäuse (39) des Bohrmotors (1) koppelbar ist.

7. Bohrmotor nach einem der Ansprüche 1 bis 6, **dadurch gekennzeichnet, dass** die Arretiervorrichtung (29) einen Hülsenfreilauf (40) umfasst.

8. Bohrmotor nach einem der Ansprüche 1 bis 7, **dadurch gekennzeichnet, dass** der innenliegende Werkzeugabschnitt (13) einen Innensechskant, einen Innensechsrund oder einen Innensechszwölf aufweist.

9. Set aus einem Bohrmotor nach einem der Ansprüche 1 bis 8 und einer Bohrkrone (1) mit einem Anschluss (23) für den Bohrmotor (1), wobei der Anschluss (23) von einem rohrförmigen Abschnitt (23) gebildet wird, der an der Außenseite ein Außenprofil (26) und an der Innenseite ein Innengewinde (27) aufweist.
